Europäisches Patentamt

European Patent Office

Office européen des brevets

(11) Veröffentlichungsnummer: **0 173 102**
**A2**

(12) # EUROPÄISCHE PATENTANMELDUNG

(21) Anmeldenummer: **85109648.7**

(22) Anmeldetag: **31.07.85**

(51) Int. Cl.⁴: **H 04 Q 7/00**

(30) Priorität: **25.08.84 DE 3431302**

(43) Veröffentlichungstag der Anmeldung: **05.03.86**
**Patentblatt 86/10**

(84) Benannte Vertragsstaaten: **AT CH DE FR GB LI SE**

(71) Anmelder: **Philips Patentverwaltung GmbH,**
**Billstrasse 80, D-2000 Hamburg 28 (DE)**

(84) Benannte Vertragsstaaten: **DE**

(71) Anmelder: **N.V. Philips' Gloeilampenfabrieken,**
**Groenewoudseweg 1, NL-5621 BA Eindhoven (NL)**

(84) Benannte Vertragsstaaten: **CH FR GB LI SE AT**

(72) Erfinder: **Scheinert, Stefan, Blütenstrasse 37,**
**D-8501 Eckental (DE)**

(74) Vertreter: **Dreykorn-Lindner, Werner et al, Philips**
**Patentverwaltung GmbH**
**Postfach 10 51 49 Billstrasse 80,**
**D-2000 Hamburg 28 (DE)**

(54) **Selektivruf- und Wähleinrichtung für eine bewegliche Funkstation eines Funkübertragungssystems.**

(57) Die Selektivruf- und Wähleinrichtung einer beweglichen Funkstation bildet Funkwahltelegramme, wertet empfangene Impulstelegramme aus und steuert ein in der beweglichen Funkstation angeordnetes Funkgerät und Bediengerät. Hierzu enthält die Selektivruf- und Wähleinrichtung einen ersten Speicher, in welchen länderspezifische Konstanten aufgenommen sind, einen Programmspeicher, einen Datenspeicher und einen Mikroprozessor. Im Programmspeicher sind Befehle und Systemkonstanten aufgenommen.

Zur nachträglichen Veränderung solcher Systemkonstanten, ohne daß das im Programmspeicher enthaltene Programm geändert werden müßte, werden in einem zweiten Speicher die Systemkonstanten gespeichert, welcher über eine Ein- und Ausgabeeinrichtung mit dem Mikroprozessor verbunden ist.

Philips Patentverwaltung GmbH

N.V. Philips' Gloeilampenfabrieken

PHD 84335 EP

30.07.1985

0173102

## Selektivruf- und Wähleinrichtung für eine bewegliche Funkstation eines Funkübertragungssystems

Die Erfindung betrifft eine Selektivruf- und Wähleinrichtung für eine bewegliche Funkstation eines Funkübertragungssystems.

Aus TE KA DE Technische Mitteilungen 1980, Seiten 10 bis 14, insbesondere Seiten 12 und 13, ist eine Selektivrufund Wähleinrichtung gemäß Oberbegriff des Patentanspruchs 1 bekannt. Die Selektivruf- und Wähleinrichtung ist in einem Sprechfunkgerät angeordnet, welches zusammen mit Funkgerät FG und Bediengerät BG Bestandteil der beweglichen Funkstation ist (in der Figur dargestellt). Die Selektivruf- und Wähleinrichtung erzeugt Funkwahltelegramme, die über das Funkgerät FG ausgesendet werden, wertet empfangene Impulstelegramme aus und steuert sowohl das Funkgerät FG als auch die Anzeige des Bediengeräts BG an. Daneben wertet die Selektivruf- und Wähleinrichtung die Tastaturinformation, welche am Bediengerät BG eingegeben wird, aus.

Die Selektivruf- und Wähleinrichtung enthält einen Mikroprozessor CPU, welcher über Daten-, Adress- und Steuerbus (Sammelleitungssystem) mit Speichern (PSP, DSP), mit einer Zählerschaltung (T) und mit einer Ein- und Ausgabeeinrichtung (E/A) verbunden ist. Um die Speicher (PSP, DSP), die Zählerschaltung (T) und die Ein- und Ausgabeeinrichtung (E/A) adressieren zu können, ist in der Selektivruf- und Wähleinrichtung ein Adressdecoder angeordnet (nicht dargestellt). Das Programm für den Mikroprozessor CPU ist in einem Programmspeicher PSP abgespeichert, welcher als Festwertspeicher aufgeführt ist.

Für die Speicherung von variablen Daten, die beispielsweise während des Programmablaufs benötigt werden, enthält die Selektivruf- und Wähleinrichtung einen Datenspeicher DSP.

In einem ersten Speicher SP1 der Selektivruf- und Wähleinrichtung sind länderspezifische Konstanten, z.B. Rufkanalnummern, Suchlaufbereich und der maximale Kanalbefehl gespeichert, welcher mit der Ein- und Ausgabeeinrichtung E/A verbunden ist. Durch die Verlagerung von länderspezifischen Konstanten aus dem Programmspeicher PSP in den ersten Speicher SP1 konnte die Zahl der Programme für verschiedene Länder gering gehalten werden. In den Pflichtenheften der verschiedenen Betreiber von Funkübertragungssystemen werden Systemkonstanten, wie z.B. Anzahl der zu sendenden Funkmeldungen, Hörtöne, Anzeigen, HF- und Jitter-Schwellen, Anzahl der Wiederholungen oder Zeiten für die Überwachung, festgelegt und sind im Programmspeicher PSP aufgenommen. Diese Systemkonstanten werden vor der Inbetriebnahme des Funkübertragungssystems festgelegt und können während des Betriebs nur mit großem Aufwand geändert werden. Die Hersteller von beweglichen Funkstationen nehmen die vorgegebenen Systemkonstanten an irgendeiner Stelle im jeweils entwickelten Programm auf, so daß eine Änderung der Systemkonstanten gleichzusetzen ist mit einer Änderung der im Programmspeicher PSP aufgenommenen Programme. In TE KA DE Technische Mitteilungen 1980 ist der Weg aufgezeigt worden, Konstanten, welche sich von Land zu Land unterscheiden, nicht im Programmspeicher PSP sondern im zusätzlichen Speicher SP1 aufzunehmen.

In der nicht vorveröffentlichten DE-OS 33 14 557 ist eine Sende- und Empfanganordnung für den Sprechfunkverkehr vorgeschlagen, welche einen mit teilnehmerspezifischen

-3-

Parametern programmierbaren Speicher und einen diesem Speicher zugeordneten Mikrocomputer aufweist. Dem Benutzer ist dadurch die Möglichkeit eröffnet, eine Auswahl zwischen Sätzen fest vorgegebener Parameter vorzunehmen. Hierdurch wird dem Benutzer die Möglichkeit eröffnet, auch ohne spezielle Fachkenntnisse von ihm gewünschte Leistungsmerkmale auszuwählen. Diese Auswahl ist vergleichbar mit dem in TE KA DE Technische Mitteilungen 1980 aufgezeigten Weg der Auswahl zwischen Sätzen von Systemkonstanten, welche sich von Land zu Land unterscheiden. Eine Anpassung der Sende- und Empfangsanordnung bei einer Änderung des Satzes von Parametern erfordert den Austausch des Mikricomputer selbst. Dieser Austausch ist auf die hierzu notwendige Programmänderung zurückzuführen.

Der Erfindung liegt die Aufgabe zugrunde, eine Selektivruf- und Wähleinrichtung derart auszugestalten, daß eine nachträgliche Änderung von Systemkonstanten nicht eine Änderung des Programmspeichers aufgenommenen Programms zur Folge hat.

Diese Aufgabe wird gemäß der Erfindung durch die Merkmale des Patentanspruchs 1 gelöst.

Der Erfindung liegt dabei die Erkenntnis zugrunde, daß im Gegensatz zu bekannten Selektivruf- und Wähleinrichtungen durch die Verlagerung dieser Systemkonstanten in einem zweiten Speicher ein Möglichkeit zur Änderung von Systemkonstanten geschaffen werden kann. Hierfür ist der obengenannten Literaturstelle keine Anregung zu entnehmen. Die erfindungsgemäße Selektivruf- und Wähleinrichtung weist den Vorteil auf, daß zwischen Speicher SP2 und Einund Ausgabeeinrichtung E/A eine Schnittstelle mit einheitlichen Schnittstellenbedingungen auftritt. Dadurch

-4-

-4-

ist es erstmals möglich, daß ein Betreiber eines Funkübertragungssystems die Systemkonstanten während des Betriebs ändern kann, ohne daß der Hersteller von beweglichen Funkstationen das im Programmspeicher PSP aufgenommene Programm ändern muß oder den Mikrocomputer selbst
austauschen muß.

Die Erfindung wird im folgenden anhand einer in der
Zeichnung dargestellten Ausführungsform näher beschrieben
und erläutert.

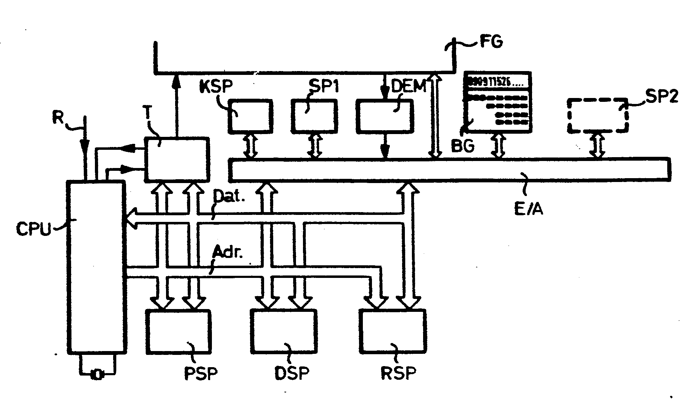

Wie ein Vergleich der Figur mit Bild 5 der obengenannten
Literaturstelle zeigt, ist bei der erfindungsgemäßen
Selektivruf- und Wähleinrichtung lediglich zusätzlich ein
zweiter Speicher SP2, welcher strichliniert dargestellt
ist, erforderlich. In dem zweiten Speicher SP2 werden die
Systemkonstanten, insbesondere Anzahl der zu sendenden
Funkmeldungen, Hörtöne, Anzeigen, Anzahl der Wiederholungen, HF- und Jitter-Schwellen und Zeiten für Überwachungen aufgenommen. Sollen diese Systemkonstanten geändert werden, so ist dies durch Auswechseln des zweiten
Speichers SP2 auch nachträglich möglich, ohne daß der
Programmspeicher ausgewechselt werden müßte. Der Mikroprozessor CPU greift mittels der Eingabe- und Ausgabeeinrichtung E/A auf die im zweiten Speicher SP2 gespeicherten Systemkonstanten zu und führt in Abhängigkeit des im
Programmspeicher PSP gespeicherten Programms den Systemablauf durch.

In einer weiteren Ausführungsform der Erfindung kann ein
in der Selektivruf- und Wähleinrichtung angeordneter
Kennungsspeicher KSP mit dem zweiten Speicher SP2 zu
einem Speicher zusammengefaßt werden, so daß vom Betreiber des Funkübertragungssystems durch Auswechseln dieses
Speichers auf einfache Art und Weise neue Zuordnungen

-5-

durchführbar sind. Durch die Aufnahme der mobilen Teilnehmernummer und der Kennung in diesem Speicher kann der zusätzliche Kennungsspeicher KSP entfallen.

In einer weiteren Ausführungsform der Erfindung werden neben den Systemkonstanten im zweiten Speicher SP2 auch Leistungsmerkmale für die bewegliche Funkstation gespeichert. Dadurch wird die Möglichkeit geschaffen, beispielsweise bestimmte Dienste auf bestimmte Gebiete des Funkübertragungssystems zu begrenzen. Diese Möglichkeit ist auch für einen Benutzer der Sende- und Empfangsanordnung gemäß der nicht vorveröffentlichten DE-OS 33 14 557 gegeben, soweit diese Leistungsmerkmale in den Sätzen von teilnehmerspezifischen Parametern vorhanden sind.

0173102

Philips Patentverwaltung GmbH
N.V. Philips' Gloeilampenfabrieken

PHD 84335 EP
30.07.1985

Patentansprüche

1. Selektivruf- und Wähleinrichtung für eine bewegliche Funkstation eines Funkübertragungssystems, welche einen ersten Speicher (SP1), einen Programmspeicher (PSP), einen Datenspeicher (DSP) und einen Mikroprozessor (CPU) enthält, welcher mittels einer Ein- und Ausgabeeinrichtung (E/A) auf die im ersten Speicher (SP1) enthaltenen länderspezifischen Konstanten zugreift und welcher diese anhand des im Programmspeichers (PSP) enthaltenen Programms verarbeitet, <u>dadurch gekennzeichnet</u>, daß in einem zweiten Speicher (SP2) Systemkonstanten gespeichert werden und daß der zweite Speicher (SP2) mit der Ein- und Ausgabeeinrichtung (E/A) verbunden ist.

2. Selektivruf- und Wähleinrichtung nach Anspruch 1, <u>dadurch gekennzeichnet</u>, daß im zweiten Speicher (SP2) die mobile Teilnehmernummer, die Kennung und Leistungsmerkmale für die bewegliche Funkstation gespeichert werden.

1/1

PHD 84335